(19) **Europäisches Patentamt European Patent Office Office européen des brevets**

(11) **EP 3 583 392 B1**

(12) **EUROPEAN PATENT SPECIFICATION**

(45) Date of publication and mention of the grant of the patent:
**16.08.2023 Bulletin 2023/33**

(21) Application number: **18753686.7**

(22) Date of filing: **16.02.2018**

(51) International Patent Classification (IPC):
**G01J 9/02** $^{(2006.01)}$   **G01J 9/00** $^{(2006.01)}$

(52) Cooperative Patent Classification (CPC):
**G01J 9/00; G02B 2207/114**

(86) International application number:
**PCT/US2018/000057**

(87) International publication number:
**WO 2018/151842 (23.08.2018 Gazette 2018/34)**

(54) **MULTI-PHOTON WAVEFRONT SENSOR, METHODS, AND APPLICATIONS**

MEHRPHOTONENWELLENFRONTSENSOR, VERFAHREN UND ANWENDUNGEN

CAPTEUR DE FRONT D'ONDE MULTIPHOTONS, PROCÉDÉS ET APPLICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2017 US 201762459809 P**

(43) Date of publication of application:
**25.12.2019 Bulletin 2019/52**

(73) Proprietor: **Cornell University Ithaca, NY 14850 (US)**

(72) Inventors:
• **XU, Chris Ithaca, NY 14850 (US)**
• **SINEFELD, David Ithaca, NY 14850 (US)**
• **XIA, Fei Ithaca, NY 14850 (US)**

(74) Representative: **Vossius & Partner Patentanwälte Rechtsanwälte mbB Siebertstrasse 3 81675 München (DE)**

(56) References cited:
JP-A- 2014 037 987    US-A1- 2010 262 016
US-A1- 2011 134 436    US-A1- 2013 178 934
US-A1- 2014 176 904    US-A1- 2015 362 713

• **FEI XIA ET AL: "Two-photon Shack-Hartmann wavefront sensor", OPTICS LETTERS, vol. 42, no. 6, 10 March 2017 (2017-03-10), page 1141, XP055733349, US ISSN: 0146-9592, DOI: 10.1364/OL.42.001141**
• **H. J. TIZIANI ET AL: "Shack-Hartmann sensor for fast infrared wave-front testing", JOURNAL OF MODERN OPTICS, vol. 44, no. 3, 1 March 1997 (1997-03-01), pages 535-541, XP055733705, LONDON, GB ISSN: 0950-0340, DOI: 10.1080/09500349708232919**

EP 3 583 392 B1

## Description

### Cross-Reference to Related Applications

The present application claims priority to U.S. Provisional Application No. 62/459,809, filed on February 16, 2017, and entitled "Multi-Photon Wavefront Sensor, Methods, and Applications".

### Statement Regarding Federally Sponsored Research

This invention was made with government support under Grant Numbers EY026391 & NS090530 awarded by the National Institutes of Health. The government has certain rights in the invention.

### Field of the Disclosure

The present disclosure is directed generally to a two-photon Shack-Hartmann wavefront sensor utilized to extend the working spectrum of conventional wavefront sensors to a doubled spectrum range.

### Background

Wavefront sensing is an important tool in optical testing, and is an essential component of beam characterization for both industrial and research applications. The ability to perform a real-time measurement of optical aberrations is critical in many adaptive-optics (AO) systems where perfecting the image is realized by active mitigation of those aberrations. The wide range of AO applications include astronomy, free space optical communication, retinal imaging, OCT and laser scanning microscopy, among others. Although wavefront sensors have been widely available for decades, they have only been exploited for use within the single-photon absorption spectrum of the material used in the optical detector.

A Shack-Hartmann wavefront sensor (SHWS) is one of the most common instruments for measuring aberrations. In a SHWS, the local slopes of the wavefront are sampled using a micro-lens array (MLA) which generates a spot matrix on a camera. The local slopes are calculated based on the deviation of the spots from their initial position, resulting in a reconstructed wavefront. The simplicity of SHWS, which combines an off-the-shelf camera together with an MLA that can be manufactured in a mass-production fabrication process, makes it a preferred and common solution for wavefront sensing. Commercial versions of SHWS that can be found at relatively low prices serve as essential building blocks in many AO systems.

However, commercially available wavefront sensors are based mostly on silicon cameras where the Si bandgap is about 1.11 eV at 302 K, corresponding to a cut-off wavelength at about 1127 nm for single-photon absorption. However, when working at wavelengths beyond the cut-off wavelength of silicon where the optical detectors are rare or very expensive, it becomes difficult to implement wavefront sensing with desired detector materials. At wavelengths in the near-infrared (NIR) region, one can find commercial solutions based on either phosphorus up-conversion, or InGaAs-based detector. Both solutions are more expensive, and cover only a small portion of the NIR spectral region. For broader spectral response, it is possible to use a mercury cadmium telluride (MCT) camera as a detector, but this is an expensive, custom solution, and is not widely available. Because of the issues in material availability, expense and spectrum limitation, the application of wavefront sensors to a wider spectrum is restrictive.

Accordingly, there is a continued need to for efficient and affordable systems that extend the working spectrum of wavefront sensing from the visible range to the NIR. US 2015/0362713 A1 discloses rapid adaptive microscopy over large multicellular volumes. H. J. Tiziani et al. describe a Shack-Hartmann sensor for fast infrared wave-front testing in Journal of Modern Otics, 44:3, 535-541 (1997).

### Summary of the Disclosure

The present invention provides a multi-photon wavefront sensor system as defined by claim 1, and a method for sensing a wavefront as defined by claim 8. The present disclosure is directed to a two-photon Shack-Hartmann wavefront sensor that extends the working spectrum of a SHWS from the visible range to the NIR. The system is based on multiphoton absorption phenomenon using pulsed laser to detect wavefronts even when the wavelength of the laser exceeds the linear spectral detection range of the material. Similar to multiphoton excitation in fluorescence microscopy, multiphoton excitation of photoelectrons further provides the spatial and temporal filtering necessary for detecting the ballistic photons deep within scattering medium, therefore enabling highly sensitive nonlinear detection of ballistic photons. In this way, it is possible to measure the wavefront of a pulsed-laser beam up to, for example, 2200 nm using an affordable device. According to an embodiment, a conventional single-photon Shack-Hartmann wavefront sensor is optimized into a two-photon Shack-Hartmann wavefront sensor, which significantly improves detection sensitivity.

According to one aspect of the present disclosure is a multi-photon wavefront sensor system. The multi-photon wavefront sensor system includes: a Shack-Hartmann wavefront sensor; and a laser excitation source configured to emit a plurality of laser pulses at a wavelength in the near-infrared range, wherein the plurality of laser pulses are configured to induce multi-photon absorption in a detector material of the Shack-Hartmann wavefront sensor.

According to an embodiment, a depth of the device active layer for generation and detection of multi-photon photocurrent in the Shack-Hartmann wavefront sensor is larger than an axial spot size of a spot generated from a wavefront tilt by the Shack-Hartmann wavefront sensor.

According to an embodiment, a numerical aperture of a microlens array of the Shack-Hartmann wavefront sensor is > 0.4.

According to an embodiment, the laser excitation source is a fiber laser, and the system further includes a large-mode-area photonic crystal fiber.

According to an embodiment, the laser excitation source is configured to emit a plurality of laser pulses comprising approximately 70-380 fs at approximately a 4 MHz frequency.

According to an embodiment, the laser excitation source is configured to emit a plurality of laser pulses comprising between approximately 1500 nm and 2200 nm.

According to an embodiment, the excitation source is configured to induce two-photon absorption in a detector material of the Shack-Hartmann wavefront sensor.

According to an embodiment, the system further includes a half-wave plate and a polarizing beam splitter.

According to an embodiment, the system further includes one or more lenses configured to adjust a beam of the laser excitation source.

According to an embodiment, the Shack-Hartmann wavefront sensor comprises a Si-CCD camera.

According to an aspect is a multi-photon wavefront sensor system. The multi-photon wavefront sensor system includes a Shack-Hartmann wavefront sensor; and a fiber laser excitation source configured to emit a plurality of laser pulses at a wavelength in the near-infrared range and comprising approximately 70-380 fs at approximately a 4 MHz frequency, wherein the plurality of laser pulses are configured to induce multi-photon absorption in a detector material of the Shack-Hartmann wavefront sensor, where a depth of a device active layer for generation and detection of multi-photon photocurrent in the Shack-Hartmann wavefront sensor is larger than an axial spot size of a spot generated from a wavefront tilt by the Shack-Hartmann wavefront sensor.

According to an aspect is a method for sensing a wavefront. The method includes the steps of: (i) emitting, by a laser excitation source, a plurality of laser pulses at a wavelength in the near-infrared range; and (ii) inducing, by the plurality of laser pulses, multi-photon absorption in a detector material of a Shack-Hartmann wavefront sensor.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description are merely examples of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention and together with the description serve to explain the principles and operation of the invention.

**Brief Description of the Drawings**

The present invention will be more fully understood and appreciated by reading the following Detailed Description in conjunction with the accompanying drawings, in which:

FIG. 1A is a schematic representation of a two-photon Shack-Hartmann wavefront sensor, in accordance with an embodiment.

FIG. 1B is a schematic representation of axial scanning of two-photon absorption response of a silicon-camera sensor array and a silicon photodiode, in accordance with an embodiment.

FIG. 2 is a graph of the spectral response of a silicon-based detector array and InGaAs detector, in accordance with an embodiment.

FIG. 3 is a series of graphs comprising measurements of second-order interferometric autocorrelations of laser pulses at (a) 1550 nm, (b) 1750 nm and (c) 2000 nm, in accordance with an embodiment.

FIG. 4 is a series of graphs of logarithmic plots measured with 1550 nm laser pulses for (a) a silicon photodiode; (b) a CMOS camera; and (c) a CCD camera, in accordance with an embodiment.

FIG. 5 is a series of graphs of measured wavefronts of a 1000 mm-focal-length cylindrical lens at a wavelength of 2000 nm in the following rotational orientations: (a, d) 45°; (b, e) 0°; (c, t) 90°, and the measured wavefront of a 200 mm-focal-length cylindrical lens at the following wavelengths: (g) 1550 nm, (h) 1750 nm (i) 2000 nm, in accordance with an embodiment.

FIG. 6 is a graph of the axial two-photon absorption response of a silicon photodiode and a silicon- based camera sensor, in accordance with an embodiment.

FIG. 7 is a schematic representation of a two-photon Shack-Hartmann wavefront sensor, in accordance with an embodiment.

## Detailed Description of Embodiments

The present disclosure is directed to a two-photon Shack-Hartmann wavefront sensor that extends the working spectrum of a SHWS from the visible range to the NIR. The system is based on multiphoton absorption phenomenon using pulsed laser to detect wavefronts even when the wavelength of the laser exceeds the linear spectral detection range of the material. Similar to multiphoton excitation in fluorescence microscopy, multiphoton excitation of photoelectrons further provides the spatial and temporal filtering necessary for detecting the ballistic photons deep within scattering medium, therefore enabling highly sensitive nonlinear detection of ballistic photons. In this way, it is possible to measure the wavefront of a pulsed-laser beam up to, for example, 2200 nm using an affordable device. According to an embodiment, a conventional single-photon Shack-Hartmann wavefront sensor is optimized into a two-photon Shack-Hartmann wavefront sensor, which significantly improves detection sensitivity.

Two-photon absorption in semiconductors is a known phenomenon where two long-wavelength photons generate one photoelectron in the material. For example, two-photon absorption in silicon photodiodes is commonly used in autocorrelation for temporal measurement of short pulses and plays an important role in silicon photonics applications such as fast optical modulators, high speed optical logic gates, and telecom applications. As described or otherwise envisioned herein, two-photon absorption was studied and demonstrated for laser pulses in silicon photodiodes and avalanche photodiodes. Silicon two-photon absorption cross section was characterized, for example, from 850 nm to 2200 nm. High peak intensity is typically needed to generate two-photon absorption signal. However, when using sub-picosecond NIR laser pulses, the peak power becomes large enough to generate two-photon absorption even for small NA values.

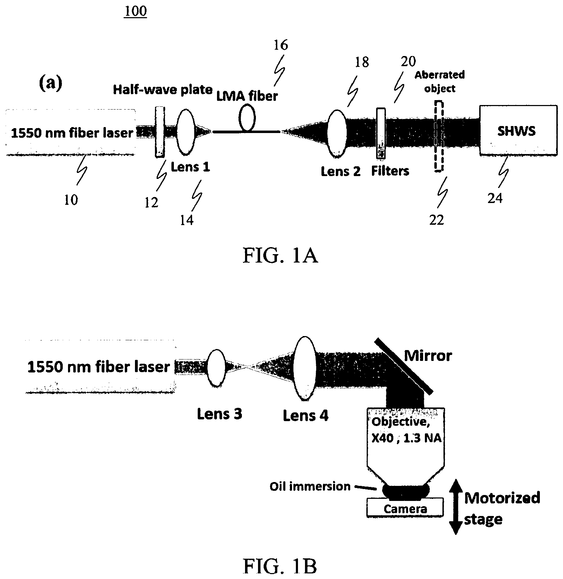

Referring to FIG. 1, in one embodiment, is a schematic representation of a two-photon Shack-Hartmann wavefront sensor (2P SHWS) system 100 under pulsed laser illumination at the NIR. According to an embodiment, a single-photon wavefront sensor (1P SHWS) 24 can be used for the 2P SHWS wavefront detection as described or otherwise envisioned herein. Due to the high peak power achieved by subpicosecond or shorter pulsed laser, a two-photon absorption signal will be generated even for micro-lens array with small numerical aperture. Accordingly, with two-photon absorption, the 2P SHWS system 100 can detect wavefronts at the NIR region. According to an embodiment, the 2P SHWS system 100 may not require any modification of the software of the one photon Shack-Hartmann wavefront sensor.

According to an embodiment, 2P SHWS system 100 comprises a laser 10 utilized as an illumination source. Laser 10 can be a pulsed laser in the NIR, at 1550 nm although other wavelengths are possible. 2P SHWS system 100 can also comprise a half-wave plate 12 and/or a polarizing beam splitter (PBS) (not shown) which can be utilized to control the laser power. 2P SHWS system 100 can also comprise lens 14 and/or lens 18 which can be utilized as a beam expander. 2P SHWS system 100 can also comprise one or more filters 20 which can be utilized to select specific wavelength in the NIR when needed.

Experimental data demonstrates that a single-photon Shack-Hartmann wavefront sensor can be optimized into a two-photon Shack-Hartmann wavefront sensor, thereby extending the working spectrum of a SHWS from the visible range to the NIR.

According to an embodiment, 2P SHWS system 100 comprises a fiber laser 10 configured to deliver 380 fs pulses with pulse energy up to 0.5 mJ at 1550 nm at 4 MHz repetition rate. 2P SHWS system 100 also comprises a large-mode-area photonic crystal fiber 16, lens 14 comprises a $f=45$ mm, and lens 18 comprises a $f=50$ mm. According to an embodiment, the sensor 24 comprises an off-the-shelf wavefront sensor, such as WFS150-7AR from Thorlabs, which comprises a Si-CCD camera (1280 x 1024 Pixels, pixel size of 4.65 $\mu$m) and a 39 x 31 MLA with an effective focal length of 5.2 mm and micro-lens pitch of 150 $\mu$m.

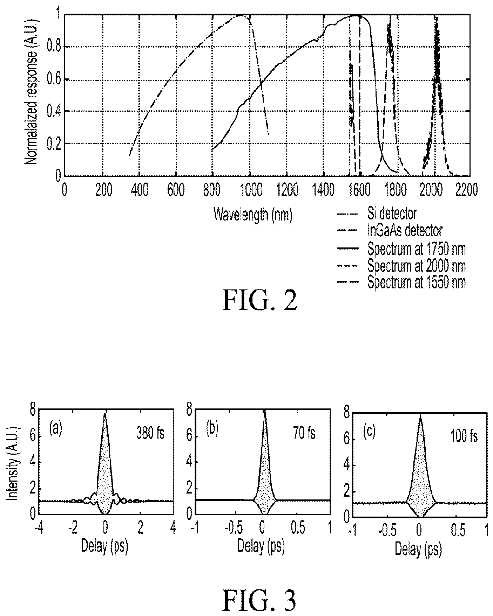

Referring to FIG. 2 is a graph of the spectral response of a silicon-based detector array and InGaAs detector, in accordance with an embodiment. The linear spectral response of the CCD camera was limited by the response of

**EP 3 583 392 B1**

silicon, as shown in FIG. 2. According to an embodiment, several wavelengths in the NIR, including but not limited to 1550 nm, 1750 nm and 2000 nm, can be utilized in order to demonstrate the wavefront sensing performance in wavelengths outside the linear detection range of an InGaAs camera, which is limited to approximately 1700 nm. In FIG. 2, for example, the spectral response of a silicon-based detector array and an InGaAs detector are shown as are the measured spectra of the fiber laser source at 1550 nm, and the shifted soliton at 1750 nm and 2000 nm.

A fiber laser (CAZADERO, Calmar lasers) was utilized which delivers 380 fs pulses at 1550 nm with maximal pulse energy of 0.5 mJ at 4 MHz repetition rate. FIG. 3(a), for example, depicts measurements of second-order interferometric autocorrelations of laser pulses at 1550 nm (where a deconvolution factor of 1.54 for $sech^2$-pulse was assumed to obtain the indicated pulse durations). To generate 1750 nm and 2000 nm pulses, the light was coupled into a 1-meter long large mode area (LMA) fiber with ~21 μm mode field diameter (LMA25, NKT). The high peak power of the coupled light generated a soliton pulse inside the LMA fiber, which shifted its central wavelength to a longer wavelength up to 2 μm according to the input power due to soliton self-frequency shift (SSFS). By using an input power of 300 mW and by spectral filtering of the LMA fiber output, the system obtains soliton pulses at 1750 nm with pulse duration of 70 fs. FIG. 3(b), for example, depicts measurements of second-order interferometric autocorrelations of laser pulses at 1750 nm. By increasing the input power to 1.2 W, the soliton was shifted to 2μm with pulse duration of 100 fs. FIG. 3(c), for example, depicts measurements of second-order interferometric autocorrelations of laser pulses at 2000 nm.

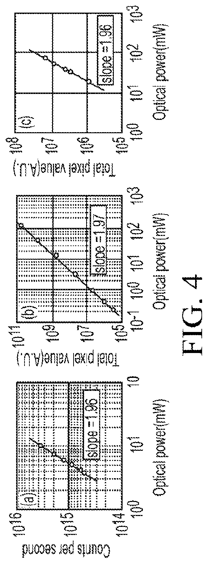

For demonstration of the 2P SHWS, it was first verified that the silicon detector response is indeed TPA at the longer wavelengths. The fiber laser source was utilized at 1550 nm and measured the output signal as a function of the input power. The results are shown in logarithmic scale in FIG. 4, where the slopes of the power dependence indicate the order of the nonlinear optical process. The measurements were performed for silicon PD, CMOS camera, and CCD camera, all confirming two-photon response.

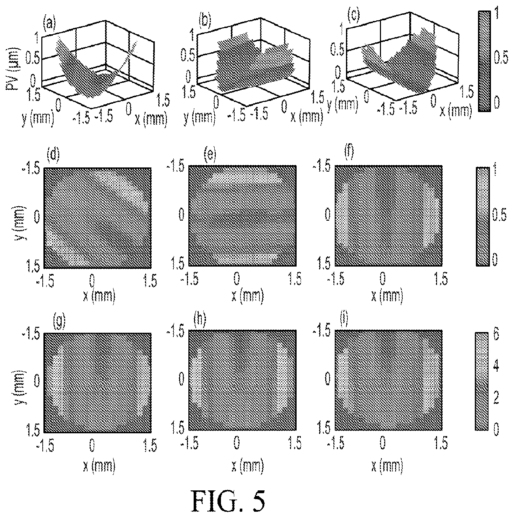

The illumination source was operated at three different NIR wavelengths with several cylindrical lenses to measure wavefront aberrations. The results, shown in FIG. 5a-f, demonstrate that 2P SHWS can measure wavefront distortions introduced by the cylindrical lens at various orientations. In addition, FIG. 5g-i shows that the results match the expected wavefront curvature, which corresponds to a cylindrical lens with a focal length of -200 mm. Since the evaluation of the wavefront relies on geometrical calculation, the results are completely independent of the detection process. The same image processing and calibration that are used for linear detection can be used in 2P SHWS without any modification.

The main limitation of the 2P SHWS is the detection sensitivity. According to an embodiment, the sensitivity can be evaluated by quantifying the lowest power needed for 2P SHWS and comparing it to that for a 1P SHWS. The generation of photocurrent in 1P and 2P has completely different dependence on the SHWS geometry. For 1P SHWS, due to the strong 1P absorption of silicon at 400-1000 nm, the photocurrent generation and detection occur within several microns of the detector surface. For 2P SHWS, the photocurrent depends critically on the axial spot size and detection depth. To maximize the 2P signal, the device layer for generation and detection of the 2P photocurrent should be larger than the axial spot size. According to an embodiment, the depth of the silicon layer that generates and detects the TPA signal may be much smaller than the axial spot size. As described or otherwise envisioned herein, the detection sensitivity of the 2P SHWS can be improved by optimizing the design parameters.

To measure the lowest power level for the 2P SHWS, the incident power was reduced until the spot diagram of the WS was too noisy for wavefront reconstruction. A 3-mm diameter aperture was placed in front of the SHWS, an aperture that includes ~ 300 micro-lenses. During all measurements, the SHWS was set to the maximal gain and exposure time (56 ms per frame) and averaged over 100 frames (total exposure time of 5.6s). For 2P SHWS, the minimum power was measured using illumination sources at 1550 nm, 1750 nm and 2000 nm. For 1P SHWS, a 635 nm CW laser (4/125-635-S-1, OZ Optics) was utilized. The results are shown in Table 1.

Table 1. Minimum power for 1P and 2P SHWS operation

| Source | Visible | Fiber Laser | Wavelength shifted solitons | |
|---|---|---|---|---|
| Wavelength [nm] | 635 | 1550 | 1750 | 2000 |
| Pulse width [fs] | CW | 380 | 70 | 100 |
| Measured minimum power per micro-lens | 0.2 pW | 6.4 μW | 2.3 μW | 8.3 μW |

The difference between the power limits of 1P SHWS and 2P SHWS is mainly caused by the vast difference in absorption by the linear and the nonlinear processes. The variation of the measured TPA power limit at different wavelengths is due to the difference in TPA coefficient and the pulse width.

To compare the minimum power results for 1P SHWS and 2P SHWS, the signal dependence on the geometry in each case was examined. The layer thickness was measured for the photocurrent generation and detection by using the 1550 nm laser source and scanning the detector axially through the focus of a high NA, oil-immersion objective, as shown in FIG. 1B.

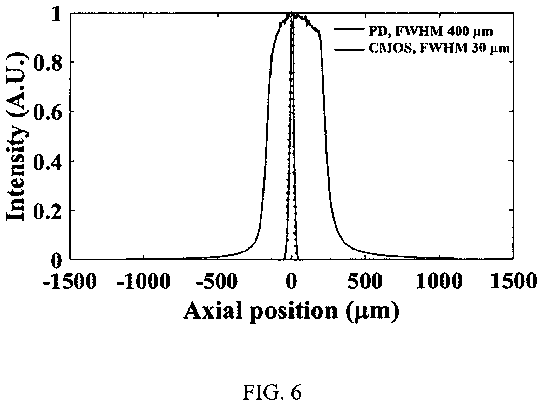

The TPA signals from the scan, shown in FIG. 6, provide the upper bound of the thickness of the device layer for photocurrent generation and detection. The experiment was conducted for a conventional PD and for a silicon-based camera (CMOS, DCC1645C, Thorlabs). The detectors were taken out of its mechanical package. The results, shown in FIG. 6, are ~ 400 $\mu$m for the PD and ~30 $\mu$m for the silicon-based camera. Both values are much larger than the 1P absorption length at 635 nm (~3 $\mu$m).

For a commercial SHWS, the NA of the MLA is small, resulting in an axial spot size (i.e., the focal depth) of a few millimeters. For example, according to one system utilized in one or more of the experiments, the NA was 0.0144. Due to the axial confinement of TPA, 2P photocurrent generation occurs mostly within the focal depth; however, because the focal depth of the low-NA MLA is several orders of magnitude larger than the measured layer thickness of the CMOS camera used in the SHWS, the active layer thickness limits the TPA signal.

Using the measured sensitivities shown in Table 1, the detection limit of 2P SHWS can be estimated. The number of photoelectrons is first calculated using the measured power at 635 nm. The lateral spot radius is ~20 $\mu$m (1/e$^2$, under Gaussian approximation), which is much larger than the 4.65 $\mu$m pixel size of the camera. For simplicity, only the number of photoelectrons on the central pixel are compared. The number of photoelectrons $N^{(1)}(t)$ for the 1P process is:

$$< N^{(1)}(t) > = \eta \frac{2P^{(1)}(t)}{\pi \omega_1^2 h \nu_1} \Delta x \Delta y \qquad \text{(Eq. 1)}$$

where $\eta$ is the quantum efficiency, $h$ is plank constant, $P^{(1)}(t)$ is the power in Watts, $\nu_1$ is the frequency of excitation light, $\omega_1$ is the 1/e$^2$ spot size radius of the beam and $\Delta x$, $\Delta y$ are the pixel lateral dimensions (which in the commercial WS $\Delta x = \Delta y = 4.65$ $\mu$m).

For TPA signal, the same formalism used for nonlinear fluorescence was utilized. Since the focal depth is much larger than the measured thickness ($\Delta z$) of the active layer of the CMOS camera, the TPA volume is determined by the pixel volume $\Delta x \Delta y \Delta z$, and the TPA signal $N^{(2)}(t)$ is therefore given by:

$$< N^{(2)}(t) > = \frac{1}{2} \frac{g_p^{(2)}}{f\tau} \eta \sigma_2 C \left( \frac{2P^{(2)}(t)/h\nu_2}{\pi \omega_2^2} \right)^2 \Delta x \Delta y \Delta z \qquad \text{(Eq. 2)}$$

where $g_p^{(2)}$ is the temporal coherence factor of the excitation source (0.59 for hyperbolic-secant-squared pulse), $f$ is the laser repetition rate, $\tau$ is the laser pulse width, $C$ is the concentration of the silicon atoms, $\sigma_2$ is the TPA cross section, $\nu_2$ is excitation light frequency and $\omega_2$ is the spot size radius as was determined by the Gaussian approximation. $P^{(2)}(t)$ is the average excitation power in Watt.

Assuming that the same number of photoelectrons is needed per microlens for generating a valid tilt at the detection threshold for 1P and 2P SHWS, $\Delta z$ can be calculated independently by using Eqs. (1) and (2), together with the measured minimum power levels listed in Table 1 and the known nonlinear absorption coefficient of silicon. It was found that $\Delta z \cong 23$ $\mu$m. This result is in good agreement with the measured value of ~30 $\mu$m as shown in FIG. 6, taking into account of the focal depth of the high NA lens (about 10 to 20 $\mu$m thick in silicon). The consistency of the 1P and 2P measurements provides a high degree of confidence that the minimum power measurements listed in Table 1 are indicative of the detection sensitivity of 2P SHWS using the commercially available WS.

Although an off-the-shelf commercial WS can be utilized, modifications can be performed to further improve TPA signal, thereby allowing wavefront measurement of longer pulse widths and at lower power levels. Using the measurement and analysis described or otherwise envisioned herein, the detection limit for a well-optimized 2P SHWS can be estimated.

According to one embodiment, signal improvement can be achieved by reducing the focal depth so that the focal depth is smaller than the thickness of the active layer. This can be done either by increasing the NA of the microlens and reducing the lateral and axial spot size, or by fabricating a thicker active layer so that the axial spot size is fully confined within the active layer. Once such a confinement is achieved, increasing the NA further will not enhance the TPA signal. Additional optimization can be obtained by changing the optical coating of the MLA and the detector material. An MLA with NA > 0.2 will be suitable for the current lateral pixel size, but will demand larger detection depth, where NA >0.4 should be suitable for a regular camera.

Using an optimally designed 2P SHWS, the focal volume is fully confined in the pixel detection volume, and the number of photoelectrons $N^{(2)}(t)$ from the TPA should be:

$$<N^{(2)}(t)> \;=\frac{1 g_p^{(2)}}{2\,f\tau}\eta\sigma_2 C n_0 \frac{a_2 <P^{(2)}(t)/h\nu_2>^2}{8\pi\lambda_2} \qquad \text{(Eq. 3)}$$

where $a_2$ is a volume integration factor which is dependent on the nonlinearity order, ($a_2$ = 64 under paraxial approximation), and $n_0$ is the refractive index of silicon. By comparing Eq. (3) and Eq. (2) one can calculate the minimum power ($P_o$) for TPA for an optimum 2P SHWS using the power levels ($P$) listed in Table 1:

$$P_o = P\sqrt{\frac{32\,\Delta x \Delta y \Delta z \lambda_2}{\pi \omega_2^4 n_0 a_2}} \qquad \text{(Eq. 4)}$$

where $\Delta x$, $\Delta y$ are the pixel lateral dimensions, $\Delta z$ is the active layer of the silicon-based camera, $\lambda 2$ is the two-photon excitation wavelength, is the spot size radius as was determined by the Gaussian approximation, $n_o$ is the refractive index of silicon, and $a_2$ is a volume integration factor which is dependent on the nonlinearity order, ($a_2$ = 64 under paraxial approximation).

Using the same pulse characteristics at 1550 nm (380 fs pulse width, 4MHz), the theoretical value for minimum power per micro-lens according to Eq. (4) should be ~ 18.5 nW, indicating a ~350-time improvement of the detection sensitivity compared to the measured result in Table 1. In this case, assuming a beam size of 3 mm with 300 micro-lenses, the minimal detected power for such a sub-picosecond pulse beam should be ~ 5.6 $\mu$W, which is equivalent to pulse energy of 1.4 pJ. The power level and pulse energy are compatible with most short pulse lasers for practical applications such as in telecommunications and biomedical imaging.

Although the wavefront sensing scheme described or otherwise envisioned herein was utilized for NIR lasers, the system can be applied to TPA beyond silicon such as measuring up to 3.4 $\mu$m mid-infrared laser sources with TPA in InGaAs based 2P SHWS. It is anticipated that many laser users in the NIR region would be able to apply this method to characterize their systems.

According to an embodiment, an application for 2P SHWS is wavefront sensing through the scattering medium. Direct wavefront sensing through s highly scattering medium is a challenging problem as the photons from the focal region can be overwhelmed by the scattered photons from elsewhere, and therefore ballistic photons and scattering photons become indistinguishable. Nonlinear excitation of the detector conveniently provides the capability of distinguishing these two types of photons. The concept of 2P SHWS parallels that of multiphoton imaging. As shown in numerous multiphoton imaging experiments through scattering tissue, only ballistic photons can generate efficient nonlinear excitation within a depth of approximately 5 to 6 attenuation length. While a conventional SHWS uses single-photon response of the camera to form the spot pattern, and works well in a non-scattering environment, 2P SHWS uses two-photon response of the camera to form the spot diagram, and has the unique advantage of spatial and temporal filtering necessary for measuring the wavefront through scattering medium. For wavefront sensing through scattering medium, the 2P SHWS should have sufficient sensitivity for detecting ballistic photons via TPA and negligible single-photon response at the incident wavelength. As is known, two-photon excitation in a Si avalanche photodiode (Si-APD) is ultrasensitive and the silicon Electron Multiplying (EM) CCD is essentially a two-dimensional version of the single element Si-APD. According, EMCCD can be used in 2P SHWS and compensate for the TPA signal loss due to scattering.

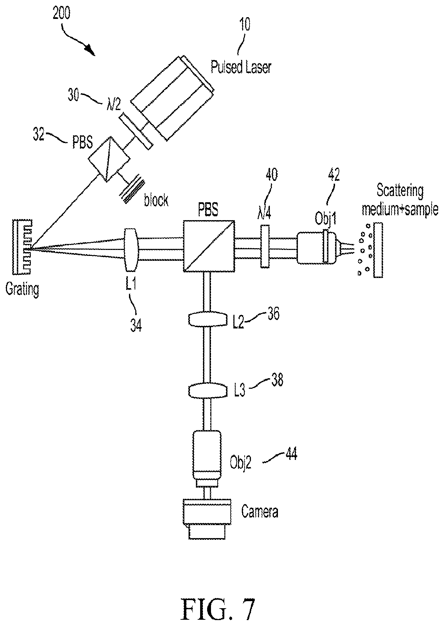

Referring to FIG. 7, in one embodiment, is a schematic representation of a system 200 for imaging through scattering medium using simultaneous spatial and temporal focusing (SSTF) illumination. According to an embodiment, system 200 comprises a pulsed laser 10, a half-wave plate ($\lambda$/2) 30, a polarizing beamsplitter (PBS) 32, a collimating lens (L1) 34, telescope lenses (L2 and L3) 36 and 38, a quarter-wave plate ($\lambda$/4) 40, and imaging objectives (Obj1 and Obj2) 42 and 44.

SSTF illumination creates a wide-field optical sectioning in the sample side due to the pulse evolution that pulses at the sample plane becomes the shortest in width. Therefore, the ballistic light remains short-pulsed, while the scattering light has stretched-pulse after temporal distortion caused by the scattering medium. It is possible to distinguish the scattering photons (background) and ballistic photons (signal) based on the TPA in the camera because the intrinsic spatial and temporal filtering ability in the nonlinear detection process.

In addition to the other variations of the systems described or envisioned herein, the systems can be modified by replacing the pulsed laser with a high power continuous-wave laser. As another embodiment, one or more of the filters in the system can be removed if a monochromatic illumination source is used. As another example, the SHWS can be replaced by a combination of a custom microlens array and a detector array (e.g. silicon camera, InGaAs camera). Additionally, the coating of the microlens array in the SHWS can be designed to cover the wavelength of the illumination source. As yet another example, the material of the detector can be changed according to the order of the nonlinear detection process and the working wavelength. These and many other variations and/or modifications are possible.

While embodiments of the present invention have been particularly shown and described with reference to certain exemplary embodiments, it will be understood by one skilled in the art that various changes in detail may be effected therein. Further, where exemplary embodiments are described with reference to a certain number of elements it will be understood that the exemplary embodiments can be practiced utilizing either less than or more than the certain number of elements.

**Claims**

1. A multi-photon wavefront sensor system, comprising:

   a Shack-Hartmann wavefront sensor (24) comprising a microlens array and a detector array, wherein the numerical aperture of the microlens array of the Shack-Hartmann wavefront sensor (24) is > 0.4; and
   a laser excitation source (10) configured to emit a plurality of laser pulses comprising 70-380 fs at a 4 MHz frequency at a wavelength in the near-infrared range between 1500 nm and 2200 nm to a detector material of the Shack-Hartmann wavefront sensor (24), wherein the plurality of laser pulses are configured to induce multi-photon absorption in the detector material of the Shack-Hartmann wavefront sensor (24).

2. The multi-photon wavefront sensor system of claim 1, wherein a depth of the device active layer for generation and detection of multi-photon photocurrent in the Shack-Hartmann wavefront sensor (24) is larger than an axial spot size of a spot generated from a wavefront tilt by the Shack-Hartmann wavefront sensor (24).

3. The multi-photon wavefront sensor system of claim 1, wherein the laser excitation source (10) is a fiber laser, and wherein the system further comprises a large-mode-area photonic crystal fiber (16).

4. The multi-photon wavefront sensor system of claim 1, further comprising a half-wave plate (12; 30, 40) and a polarizing beam splitter (32).

5. The multi-photon wavefront sensor system of claim 1, further comprising one or more lenses (14, 18; 34, 36, 38) configured to adjust a beam of the laser excitation source (10).

6. The multi-photon wavefront sensor system of claim 1, wherein the Shack-Hartmann wavefront sensor (24) comprises a Si-CCD camera.

7. The multi-photon wavefront sensor system of claim 1, wherein a depth of the device active layer for generation and detection of multi-photon photocurrent in the Shack-Hartmann wavefront sensor (24) is larger than an axial spot size of a spot generated by the Shack-Hartmann wavefront sensor (24).

8. A method for sensing a wavefront, comprising the steps of: emitting, by a laser excitation source (10), a plurality of laser pulses comprising 70-380 fs at a 4 MHz frequency at a wavelength in the near-infrared range between 1500 nm and 2200 nm to a detector material of a Shack-Hartmann wavefront sensor (24) comprising a microlens array and a detector array, wherein the numerical aperture of the microlens array of the Shack-Hartmann wavefront sensor (24) is > 0.4; inducing, by the plurality of laser pulses, multi-photon absorption in the detector material of the Shack-Hartmann wavefront sensor (24).

9. The method of claim 8, wherein a depth of the device active layer for generation and detection of multi-photon photocurrent in the Shack-Hartmann wavefront sensor (24) is larger than an axial spot size of a spot generated from a wavefront tilt by the Shack-Hartmann wavefront sensor (24).

10. The method of claim 8, wherein the laser excitation source (10) is a fiber laser.

**Patentansprüche**

1.  Mehrphotonen-Wellenfront-Sensorsystem, aufweisend:

    einen Shack-Hartmann-Wellenfront-Sensor (24) mit einem Mikrolinsen-Array und einem Detektor-Array, wobei die numerische Apertur des Mikrolinsen-Arrays des Shack-Hartmann-Wellenfront-Sensors (24) > 0,4 ist; und eine Laseranregungsquelle (10), die konfiguriert ist, mehrere Laserpulse, die 70-380fs aufweisen, mit einer Frequenz von 4MHz mit einer Wellenlänge im nahen Infrarotbereich zwischen 1500nm und 2200nm zu einem Detektormaterial des Shack-Hartmann-Wellenfront-Sensors (24) zu emittieren, wobei die mehreren Laserpulse konfiguriert sind, Mehrphotonen-Absorption in dem Detektormaterial des Shack-Hartmann-Wellenfront-Sensors (24) zu induzieren.

2.  Mehrphotonen-Wellenfront-Sensorsystem nach Anspruch 1, wobei eine Tiefe der aktiven Vorrichtungsschicht zur Erzeugung und Detektion von Mehrphotonen-Photostrom in dem Shack-Hartmann-Wellenfront-Sensor (24) größer ist als eine axiale Fleckgröße eines Flecks, der aus einer Wellenfrontneigung von dem Shack-Hartmann-Wellenfront-Sensor (24) erzeugt wird.

3.  Mehrphotonen-Wellenfront-Sensorsystem nach Anspruch 1, wobei die Laseranregungsquelle (10) ein Faserlaser ist und wobei das System ferner eine photonische Großmodenfläche-Kristallfaser (16) aufweist.

4.  Mehrphotonen-Wellenfront-Sensorsystem nach Anspruch 1, ferner aufweisend ein λ/2-Plättchen (12; 30, 40) und einen polarisierenden Strahlteiler (32).

5.  Mehrphotonen-Wellenfront-Sensorsystem nach Anspruch 1, ferner aufweisend eine oder mehrere Linsen (14, 18; 34, 36, 38), die konfiguriert sind, einen Strahl der Laseranregungsquelle (10) anzupassen.

6.  Mehrphotonen-Wellenfront-Sensorsystem nach Anspruch 1, wobei der Shack-Hartmann-Wellenfront-Sensor (24) eine Si-CCD-Kamera aufweist.

7.  Mehrphotonen-Wellenfront-Sensorsystem nach Anspruch 1, wobei eine Tiefe der aktiven Vorrichtungsschicht zur Erzeugung und Detektion von Mehrphotonen-Photostrom in dem Shack-Hartmann-Wellenfront-Sensor (24) größer ist als eine axiale Fleckgröße eines Flecks, der von dem Shack-Hartmann-Wellenfront-Sensor (24) erzeugt wird.

8.  Verfahren zum Detektieren einer Wellenfront, aufweisend die Schritte:

    Emittieren, mittels einer Laseranregungsquelle (10), mehrerer Laserpulse, die 70-380fs aufweisen, mit einer Frequenz von 4MHz mit einer Wellenlänge im nahen Infrarotbereich zwischen 1500nm und 2200nm zu einem Detektormaterial eines Shack-Hartmann-Wellenfront-Sensors (24), der ein Mikrolinsen-Array und ein Detektor-Array aufweist, wobei die numerische Apertur des Mikrolinsen-Arrays des Shack-Hartmann-Wellenfront-Sensors (24) > 0,4 ist;
    Induzieren von Mehrphotonen-Absorption in dem Detektormaterial des Shack-Hartmann-Wellenfront-Sensors (24) durch die mehreren Laserpulse.

9.  Verfahren nach Anspruch 8, wobei eine Tiefe der aktiven Vorrichtungsschicht zur Erzeugung und Detektion von Mehrphotonen-Photostrom in dem Shack-Hartmann-Wellenfront-Sensor (24) größer ist als eine axiale Fleckgröße eines Flecks, der aus einer Wellenfrontneigung von dem Shack-Hartmann-Wellenfront-Sensor (24) erzeugt wird.

10. Verfahren nach Anspruch 8, wobei die Laseranregungsquelle (10) ein Faserlaser ist.

**Revendications**

1.  Système de capteur de front d'onde multiphotons, comprenant :

    un capteur de front d'onde de Shack-Hartmann (24) comprenant un réseau de microlentilles et un réseau de détecteurs, dans lequel l'ouverture numérique du réseau de microlentilles du capteur de front d'onde de Shack-Hartmann (24) est > 0,4 ; et
    une source d'excitation laser (10) configurée pour émettre une pluralité d'impulsions laser comprises entre 70 et 380 fs à une fréquence de 4 MHz à une longueur d'onde dans la plage du proche infrarouge entre 1500 nm et 2200 nm vers un matériau de détecteur du capteur de front d'onde de Shack-Hartmann (24), dans lequel la pluralité d'impulsions laser sont configurées pour induire une absorption multiphotons dans le matériau de détecteur du capteur de front d'onde de Shack-Hartmann (24).

2. Système de capteur de front d'onde multiphotons selon la revendication 1, dans lequel une profondeur de la couche active de dispositif pour la génération et la détection d'un photocourant de multiphotons dans le capteur de front d'onde de Shack-Hartmann (24) est plus grande qu'une taille de tache axiale d'une tache générée à partir d'une inclinaison de front d'onde par le capteur de front d'onde de Shack-Hartmann (24).

3. Système de capteur de front d'onde multiphotons selon la revendication 1, dans lequel la source d'excitation laser (10) est un laser à fibre, et dans lequel le système comprend en outre une fibre à cristal photonique à grande aire modale (16).

4. Système de capteur de front d'onde multiphotons selon la revendication 1, comprenant en outre une lame demi-onde (12 ; 30, 40) et un séparateur de faisceau polarisant (32).

5. Système de capteur de front d'onde multiphotons selon la revendication 1, comprenant en outre une ou plusieurs lentilles (14, 18 ; 34, 36, 38) configurées pour ajuster un faisceau de la source d'excitation laser (10).

6. Système de capteur de front d'onde multiphotons selon la revendication 1, dans lequel le capteur de front d'onde de Shack-Hartmann (24) comprend une caméra Si-CCD.

7. Système de capteur de front d'onde multiphotons selon la revendication 1, dans lequel une profondeur de la couche active de dispositif pour la génération et la détection d'un photocourant de multiphotons dans le capteur de front d'onde de Shack-Hartmann (24) est plus grande qu'une taille de tache axiale d'une tache générée par le capteur de front d'onde de Shack-Hartmann (24).

8. Procédé pour la détection d'un front d'onde, comprenant les étapes de :

   l'émission, par une source d'excitation laser (10), d'une pluralité d'impulsions laser comprises entre 70 et 380 fs à une fréquence de 4 MHz à une longueur d'onde dans la plage du proche infrarouge entre 1500 nm et 2200 nm vers un matériau de détecteur d'un capteur de front d'onde de Shack-Hartmann (24) comprenant un réseau de microlentilles et un réseau de détecteurs, dans lequel l'ouverture numérique du réseau de microlentilles du capteur de front d'onde de Shack-Hartmann (24) est > 0,4 ;
   l'induction, par la pluralité d'impulsions laser, d'une absorption multiphotons dans le matériau de détecteur du capteur de front d'onde de Shack-Hartmann (24).

9. Procédé selon la revendication 8, dans lequel une profondeur de la couche active de dispositif pour la génération et la détection d'un photocourant de multiphotons dans le capteur de front d'onde de Shack-Hartmann (24) est plus grande qu'une taille de tache axiale d'une tache générée à partir d'une inclinaison de front d'onde par le capteur de front d'onde de Shack-Hartmann (24).

10. Procédé selon la revendication 8, dans lequel la source d'excitation laser (10) est un laser à fibre.

FIG. 1A

FIG. 1B

FIG. 2

FIG. 3

FIG. 4

EP 3 583 392 B1

FIG. 5

FIG. 6

FIG. 7

**EP 3 583 392 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62459809

- US 20150362713 A1

**Non-patent literature cited in the description**

- **H. J. TIZIANI et al.** Shack-Hartmann sensor for fast infrared wave-front testing. *Journal of Modern Otics,* 1997, vol. 44 (3), 535-541